# EUROPEAN PATENT APPLICATION

(11) **EP 2 348 193 A2**
(43) Date of publication of application: **27.07.2011**
(21) Application number: 11250079.8
(22) Date of filing: 26.01.2011
(51) Int. Cl.: F01D 5/14, F01D 5/16

(54) **Composite fan blade with a recamberable leading edge and method of manufacture**

(30) Priority: 26.01.2010 US 693754
(71) Applicant: United Technologies Corporation, Hartford, CT 06101 (US)
(72) Inventor: Alexander, Phillip, Colchester, CT 06415 (US)
(74) Representative: Tomlinson, Kerry John

(57) **Abstract**

A method of forming a vibration stable airfoil by forming a composite blade having a metallic sheath (17) thereon. The sheath has a head section (19) extending out from the blade by a sufficient distance to permit deformation of the head section. The airfoil (20) is tested to determine the vibrational stability thereof; and the head section is re-cambered to adjust the vibrational stability to a desired level.

## Description

### BACKGROUND

Composite materials offer potential design improvements in gas turbine engines. For example, in recent years composite materials have been replacing metals in gas turbine engine fan blades because of their high strength and low weight. Most gas turbine engine metal fan blades have been made from titanium. The ductility of titanium fan blades enables the fan to ingest a bird and remain operable or be safely shut down. The same requirements are present for composite fan blades.

A composite airfoil for a turbine engine fan blade can have a sandwich construction with a carbon fiber woven core at the center and two-dimensional filament reinforced plies or laminations on either side. To form the composite airfoil, individual two-dimensional plies are cut and stacked in a mold with the woven core. The mold is injected with a resin using a resin transfer molding process and cured. The plies vary in length and shape. The carbon fiber woven core is designed to accommodate ply drops so that multiple plies do not end at the same location.

Previous composite blades have been configured to improve the impact strength of the composite airfoils so they can withstand bird strikes. During use, foreign objects ranging from large birds to hail may be entrained in the inlet of the gas turbine engine. Impact of large foreign objects can rupture or pierce the blades and cause secondary damage downstream of the blades.

In order to prevent damage from the impact of foreign objects such as birds, a metallic sheath has been used to protect the leading edge of rotor blades and propellers made from composites. Materials such as titanium and nickel alloys are fitted on the leading edge of the element to be protected. Examples of sheaths used for covering and protecting a component leading edge of an airfoil component are disclosed in U.S. Patent No. 5,881,972 and U.S. Patent No. 5,908,285. In both patents, the sheaths are formed from metal that is electroformed on the airfoil component on a mandrel. The sheath and mandrel are separated and the sheath is mounted on the airfoil.

In more recent years, sheaths have been bonded on a molded composite blade by forming the blade, usually in a resin transfer molding (RTM) process. Once the blade has been formed, an adhesive is placed on the leading edge and a leading edge sheath is placed against the adhesive, heat and pressure are applied and the adhesive cures to mount the leading edge as needed. While this process is costly, it is also effective in producing airfoils capable of withstanding impact by birds and other debris that might otherwise damage or destroy the airfoil.

There are, of course, a number of factors that control the dynamic properties of rotating blades, such as speed of rotation, range of speeds, blade deflection, blade flexibility. Current composite blades are manufactured to accommodate these conditions. Due to the fact that blades are tapered, inboard regions tend to be torsionally stiff relative to the outboard regions. Thus, the outboard torsional mass and stiffness properties are of major importance.

During production of gas turbine engines, often it is necessary to revise the design of components such as 1^{st} stage fan blades and the like due to an unacceptable aero structural response known as flutter. This phenomenon occurs when the aerodynamic loading acting on an airfoil combines with the vibrational response of the airfoil to create an unstable condition with negative damping, often due to the outboard components of the blade. This instability can and often does lead to unacceptable vibrational stresses and ultimately to failure of the airfoil.

Due to a relatively long lead time in manufacturing an airfoil, one common practice with metallic airfoils is to locally re-camber the leading edge, generally in the outer span portions of the airfoil, to reduce the aerodynamic incidence and increase the flutter margin. However, when resin transfer molded composite fan blades are manufactured, the ability to locally reshape the airfoil is severely limited by the long lead time required for tooling and due to the inability to plastically deform composite materials. Essentially a whole new blade has to be made from the redesigned mold.

Composite fan blades are also subject to erosion and soft body impact. As a result, these blades are fitted with a sheath on the leading edge. Typical sheaths are made from titanium, titanium alloys, nickel and nickel alloys. The sheaths are conventionally attached to the composite fan blade by an adhesive followed by a heat cycle to cure the adhesive. It is normally at this point when flutter is found during testing. In some instances the sheath is saved or repaired for use again.

### SUMMARY

A molded composite blade with a leading edge sheath and method of making the same reduces flutter and other aerodynamic design faults in molded composite fan blades. The method includes the steps of molding the fan blade, attaching or otherwise including a metallic sheath with a plastically deformable head section that extends from the fan blade to leading edge of the blade. The fan blade is then placed in service or in a test apparatus to see the aerodynamic and operational performance. If the operation is not satisfactory, such as if flutter is observed, the head portion of the metallic sheath is re-cambered by plastic deformation to reduce vibration instability of the airfoil.

### BRIEF DESCRIPTION OF THE DRAWINGS

FIG. 1 is a perspective view of a metal sheath used on a composite blade, with the original shape shown in solid and a re-cambered shape shown in dash lines.

FIG. 2 is a cut away, partial view of a leading edge metal sheath attached to a composite blade with the original shape shown in solid and a re-cambered shape shown in dash lines.

FIG. 3 is a cut away, partial view of a leading edge metal sheath attached to a composite blade showing the change in thickness of the metal sheath in dash lines.

### DETAILED DESCRIPTION

Fan blades normally have sheaths to protect against erosion, ingestion of birds, hail and ice, tire fragments and other objects encountered during operation of the aircraft. It is essential that each blade have adequate outboard torsional mass and stiffness properties to essentially eliminate flutter and other vibrational phenomena that interfere with smooth operation of the aircraft.

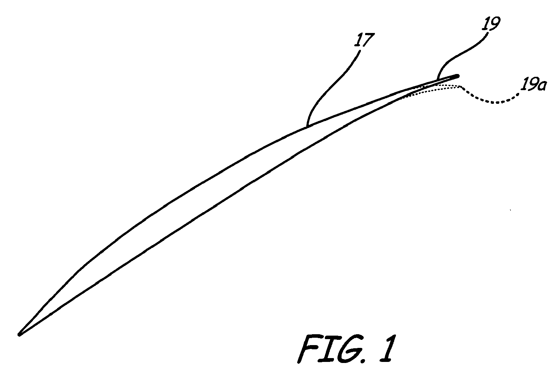

In the present invention, the metal sheath is used as more than a protective device because an additional portion has been included to allow adjustment of the shape of the metal sheath by an amount sufficient to reduce or eliminate unwanted vibrational responses during aerodynamic loading acting on the airfoil. FIG. 1 illustrates leading edge metal sheath 17 for attachment to a airfoil, not shown in FIG. 1, that has been found to have unwanted vibration and flutter. Rather than remold a new air foil, head section 19 of sheath 17 is re-cambered, such as by plastically deforming the sheath material. Re-cambering includes plastic deformation with or without heat, simple bending, and also includes replacing the sheath with a new sheath having an effectively re-cambered shape. Re-cambering means bending, curving or arching the head section to achieve a different curve or aerodynamic shape. Since sheaths are made from metal, in order to have the hard surface that resists impact by birds, hail and other ingested objects, they are capable of being deformed under heat. Plastic deformation, for example, is accomplished by placing the airfoil, or at least sheath head section 19, in a hot re-camber die and locally deforming head section19 to a new shape 19a that is estimated to eliminate flutter and other unwanted vibrations. This re-cambering of head section 19 can be done once or several times, depending on the results of further tests of the rotational stability of the blade to which it is attached.

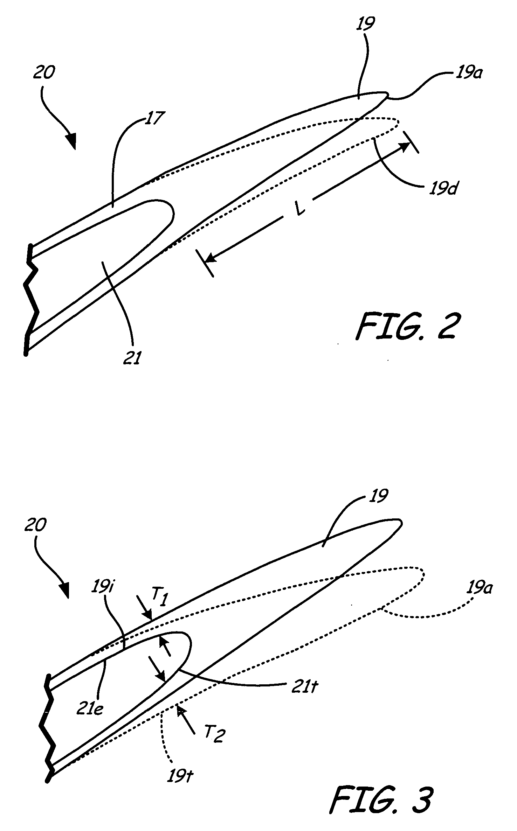

FIG 2 illustrates an enlarged view of the plastic deformation of head section 19 of sheath 17 of airfoil 20, generally, and is mounted on composite 21. During the original manufacture of composite 21, sheath 17 may be attached to the cured composite 21 that forms airfoil 20. Sheath 17 may also be formed from metal that is electroformed for use on airfoil 20. Any method for placing sheath 17 on composite 21 is within the scope of this invention as long as sheath head section 19 is formed to extend out for a sufficient distance to permit reshaping of the head section to correct vibrational properties.

Composite 21 may be formed by a variety of methods. It has been found that composite blades may be made by placing a woven core in a mold, adding filament plies to fill the mold, and resin transfer molding the blade. A method of fabrication a composite blade 21 is disclosed in EP Patent Application 10252018.6 Composite blade 21 may also be formed by molding a woven core without filament plies, or by molding a sufficient quantity of filament plies without a core. It is also contemplated that the composite 21 may be formed by pre-impregnation prior to insertion into the mold, rather than using the resin transfer mold method.

Head section 19 of sheath 17 has a longer length L, the distance from forward edge 21 a of composite 21, than conventional designs. This extra length allows for the local re-camber or bending of the airfoil by plastic deforming. By having only head section 19 extend out distance L allows for utilization of the metal in the outer span regions of blade where it can be deformed or re-cambered while minimizing the weight in the inboard regions of airfoil 20.

Typical composite airfoil leading edge sheaths are thin metallic covers. In some instances they may have a solid portion of less then ∼1" (25 mm) to improve the designs robustness to ingestion of a foreign object such as a bird. In this invention, head section 19 includes a more substantial portion 19a of more than the conventional portion of about one inch (2.54 cm) in length. Dash line 19d illustrates how sheath 17 can be altered in configuration to change the aerodynamic loading and subsequent vibrational characteristics of airfoil 20, in this case by bending head section 19a down to head section 19d. Composite 21 is unaffected by this modification , thus eliminating the need for re-molding a new composite.

In the event that the amount of re-camber that is required to eliminate vibrational concerns exceeds the limit of plastic deformation available for head section 19, a new sheath could be fabricated and installed.

FIG. 3 illustrates another means by which the re-cambering of head section 19 is accomplished by a reduction in thickness T₁ between the inside 19i of head section 19 on the leading edge 21e of composite 21 and an increase T₂ between the trailing edge 19t of head section 19 and the trailing edge 21t of composite 21. This change in thickness is accomplished by the fabrication of a new sheath detail versus the plastic deformation of the existing sheath. This alternative, although more costly, could increase the range of potential flexibility in changing the aerodynamic shape.

The present invention allows for a much shorter time for local aerodynamic modifications of a blade during engine development programs and greatly reduces the cost of producing vibrationally stable airfoils for aircraft.

While the invention has been described with reference to an exemplary embodiment(s), it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of forming a blade, comprising the steps of:
forming a composite blade having an airfoil body and a metallic sheath attached
to the airfoil body, the sheath having a head section extending forward from the airfoil body to a leading edge;
testing the blade to determine the vibrational stability of the airfoil; and
re-cambering the head section of the sheath to adjust the vibrational stability to a
desired level.

2. The method of claim 1, wherein the sheath head section extends out from the composite by at least 2.54 cm.

3. The method of claim 1 or 2, wherein the re-cambering produces a decrease in thickness of the head section on the leading edge of the blade and an increase in thickness of the head section on the trailing edge of the blade.

4. The method of claim 1, 2 or 3, wherein re-cambering the head section is accomplished by plastic deformation to adjust the vibrational stability of the airfoil.

5. The method of claim 1, 2, 3 or 4, wherein the existing sheath is removed and replaced with a sheath with an adjusted head section.

6. The method of claim 1, 2, 3, 4 or 5, wherein the re-cambering is accomplished by deforming the head section with heat to adjust the camber.

7. The method of any preceding claim, wherein the vibrational stability of the airfoil is tested a second time and the head section is re-cambered a second time if necessary to adjust the vibrational stability to the desired level.

8. A blade comprising:
a composite airfoil having a leading edge;
a metallic sheath thereon providing a strengthened leading edge to the composite
airfoil;
the sheath having a head section that extends forward from the airfoil and is re-camberable to permit adjustment of the blade to achieve vibrational stability of the blade.

9. The blade of claim 8, wherein the sheath head section extends out from the composite airfoil by at least 2.54 cm.

10. The blade of claim 8 or 9, wherein the head section is re-camberable to produce a decrease in thickness of the head section on the leading edge of the blade and an increase in thickness of the head section on the trailing edge of the blade.

11. The airfoil of claim 8, 9 or 10, wherein the head section is re-camberable by plastic deforming the head section with heat to adjust the camber.

12. The airfoil of claim 8, 9, 10 or 11, wherein the head section is recamberable by removing the existing sheath and installing a sheath with a re-cambered head section.

13. The airfoil of any of claims 8 to 12, wherein the head section on the trailing edge of the blade, and the head section is adapted to be reformed by deforming the head section with heat to adjust the camber.

14. The airfoil of any of claims 8 to 13, wherein the head section is adapted to be recambered a second time if necessary to adjust the vibrational stability of the blade.
